# EUROPÄISCHE PATENTANMELDUNG

(11) **EP 0 625 746 A1**
(43) Veröffentlichungstag der Anmeldung: **23.11.1994**
(21) Anmeldenummer: 93108163.2
(22) Anmeldetag: 19.05.1993
(51) Int. Cl.: G06F 9/38

(54) **Befehlsaufbereitungseinheit für Verarbeitungsprozessoren in Datenverarbeitungsanlagen**

(71) Anmelder: Siemens Nixdorf Informationssysteme Aktiengesellschaft, D-33102 Paderborn (DE)
(72) Erfinder: Sebbel, Helmut, Dipl.-Ing., W-8000 München 81 (DE); Epple, Erwin, Dipl.-Ing. (FH), W-8000 München 83 (DE)
(74) Vertreter: Fuchs, Franz-Josef, Dr.-Ing.

(57) **Zusammenfassung**

Steigerung der Verarbeitungsleistung durch parallele Aufbereitung jeweils zweier Befehle, die nicht gleichzeitig die Operandenbereitstellungsstufe (RM) oder die anschließende Befehlsausführungseinheit (EX1) zur Ausführung benötigen, und durch Verdopplung der der Operandenbereitstellungsstufe (RM) vorangehenden Aufbereitungsstufen (PF, AC) unter Bildung zweier paralleler Verarbeitungslinien (A und B), die wahlweise die nachfolgende gemeinsame Stufe (RM) mit aufbereiteten Befehlen speisen, so daß Sprungbefehlsfolgen frühzeitig über die jeweils andere Verarbeitungslinie parallel zur linearen Befehlsfolge aufbereitet werden können, bis die Sprungentscheidung gefallen ist.

## Beschreibung

Die Erfindung betrifft eine Befehlsaufbereitungseinheit für Verarbeitungsprozessoren in Datenverarbeitungsanlagen gemäß dem Oberbegriff des Patentanspruches 1.

Bei der nach dem Fließbandprinzip erfolgenden Befehlsaufbereitung und -ausführung werden die einzelnen Phasen einer Befehlsbearbeitung für mehrere Befehle zeitlich überlappend ausgeführt, so daß nach einer Vorlaufzeit mit jedem Fortschaltetakt des Fließbandes im Prinzip ein Befehl beendet werden kann - man siehe "Elektronische Rechenanlagen", 1973, Heft 2, Seiten 60 bis 65, insbesondere Abschnitt 2.5 "Befehls-Pipeline", Seite 63/64. Dieser Idealablauf läßt sich jedoch nur erreichen, wenn keine störenden Ereignisse auftreten, die zu Verzögerungen und damit zu Leistungsverlusten der Datenverarbeitungsanlage führen. Ursache einer solchen Störung sind vor allem die in den zu verarbeitenden Programmen sehr häufig autretenden Sprungbefehle, da sie die Verarbeitungsfolge der Befehle unvorhersehbar beeinflussen.

Bei bedingten Sprungbefehlen wird die Entscheidung über den nächstfolgenden Befehl immer erst durch die sich bei der Ausführung des Vorgängerbefehls ergebende Anzeige gefällt, so daß ein oder zwei Verlustzyklen entstehen, bis der Folgebefehl zur Ausführung gelangen kann - man siehe z.B. EP-0 239 023-B1, insbesondere Figur 1. Auch bei Lösungen mit gesonderten Sprungwerken oder gesonderten Verzweigungsspeichern für mögliche Folgebefehle entsprechend den zuletzt zutreffenden Sprungentscheidungen von vorher verarbeiteten Sprungbefehlen können diese Verlustzyklen auftreten, wenn die tatsächliche Sprungentscheidung von der vorhergesagten abweicht.

Aufgabe der Erfindung ist es daher, die Aufbereitung der zu bearbeitenden Befehle bei mit einem üblichen Standardbefehlssatz arbeitenden Datenverarbeitungsanlagen, wie er beispielsweise in der Siemens Druckschrift D15/5104-04 beschrieben ist, so zu gestalten, daß durch Sprungbefehle verursachte Verlustzyklen auf ein Mindestmaß beschränkt und gegebenenfalls auftretende Verlustzyklen teilweise kompensiert werden können, so daß die Befehlsverarbeitungsleistung insgesamt verbessert wird.

Diese Aufgabe wird durch eine Befehlsaufbereitungseinheit gemäß dem Patentanspruch 1 gelöst.

Die Erfindung geht dabei von der Tatsache aus, daß Sprungbefehle und einige andere Befehle weder die Verarbeitungsstufe für die Operandenbereitstellung noch eine anschließende Befehlsausführungseinheit und daß eine Reihe der übrigen Befehle entweder nur die Operandenbereitstellungsstufe für einen Speicherzugriff oder aber stattdessen nur die Befehlsausführungseinheit zur Ausführung benötigen. Man kann daher eine Reihe von Befehlen paarweise ohne gegenseitige Beeinträchtigung aufbereiten und so bei einigen Befehlen Verarbeitungszyklen einsparen. Außerdem kann man auf zur Aufbereitung anstehende Sprungbefehle in der Regel früher reagieren und in Verbindung mit der Verdopplung der der Stufe für die Operandenbereitstellung vorangehenden Stufen zur Aufbereitung durch Aktivieren der jeweils anderen Verarbeitungslinie die Befehle der Verzweigungsbefehlsfolge ohne Beeinträchtigung der weiteren Aufbereitung der linearen Befehlsfolge einen Zyklus früher bereitstellen, so daß sich bei Sprungbefehlen weniger Verlustzyklen ergeben.

Weiterbildungen des durch den Patentanspruch 1 umrissenen Lösungsprinzips ergeben sich aus den weiteren Patentansprüchen. Diese beziehen sich insbesondere auf die Steuerung der Bereitstellung der Befehle zur Speisung der Adreßrechnungsstufe, auf die Einbeziehung der Adreßübersetzung, auf die Verwendung von zusätzlichen Ergebnisregistern und von Auswahlschaltern zur Steuerung des Befehlsflusses entsprechend verschiedener vorgegebener Arbeitsweisen.

Einzelheiten der Erfindungen seien nachfolgend anhand eines in der Zeichnung dargestellten Ausführungsbeispieles näher erläutert. Im einzelnen zeigen
Figur 1 ein Übersichtschaltbild der Befehlsaufbereitungseinheit gemäß der Erfindung,
Figur 2 die Belegung der einzelnen Felder der Übernahmeregister der Adreßrechnungsstufen abhängig vom jeweiligen Befehlstyp,
Figur 3 eine Tabelle mit Einteilung der Befehle in Gruppen abhängig von der Benutzung der Operandenbereitstellungsstufe und/oder der nachfolgenden Befehlsausführungseinheit,
Figur 4 eine Tabelle zur Erläuterung der Parallelverarbeitbarkeit von Befehlen der verschiedenen Befehlsgruppen entsprechend der Tabelle von Figur 3 mit den Auswirkungen auf die Steuerung des Befehlsflusses und
Figur 5 bis Figur 8 Ablaufdiagramme für Befehlsfolgen zur Erläuterung der erfindungsgemäßen Auswirkungen einzelner Befehle auf die benötigte Anzahl von Ausführungszyklen.

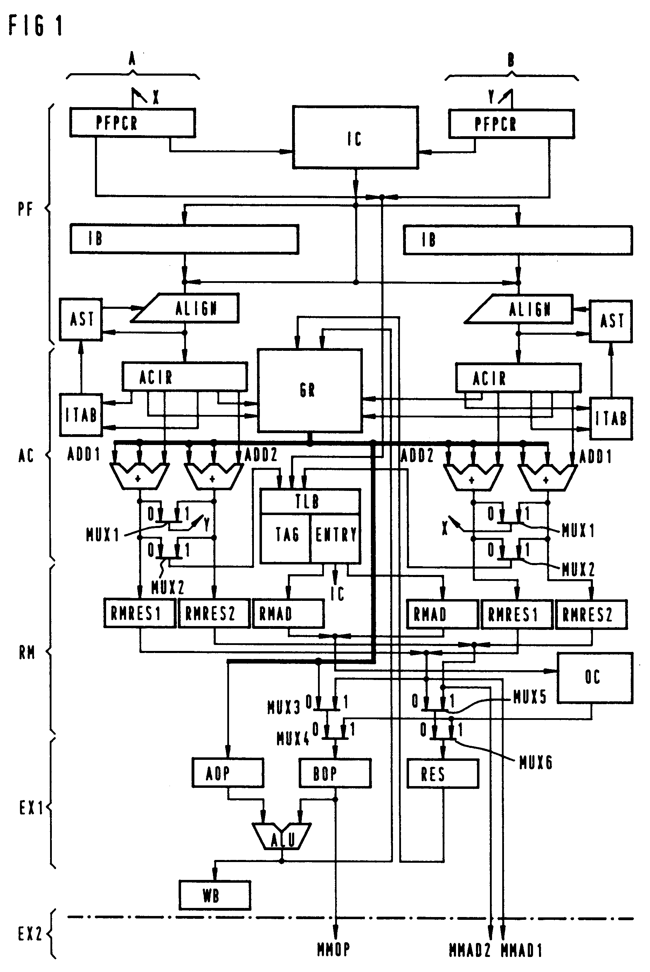

Das Übersichtschaltbild von Figur 1 zeigt und oberen Teil eine nach dem Fließbandprinzip arbeitende Aufbereitungseinheit, die beispielsweise aus drei in Folge arbeitenden Stufen besteht, nämlich einer ersten Stufe PF zur Befehlsbereitstellung, einer zweiten Stufe AC zur Operandenadreßrechnung und einer dritten Stufe RM zur Bereitstellung eines der Operanden, wobei die ersten beiden Stufen PF und AC doppelt vorgesehen sind und zwei unabhängige Verarbeitungslinien A und B für die Aufbereitung bilden.

In der ersten Stufe PF steuern jeweils Vorauslese-Befehlszähler PFPCR den Zugriff zu einem gemeinsamen Befehlscache IC, so daß Befehle aus diesem im voraus gelesen und einem Befehlspuffer IB zugeleitet werden können, wenn ein vorgegebener Füllungsgrad dem jeweiligen Befehlspuffer IB unterschritten wird. Eine Auswahleinrichtung ALIGN steuert dann die Bereitstellung der jeweils benötigten Befehle für die nachfolgende zweite Stufe AC in ausgerichteter Form.

An die Auswahleinrichtung ALIGN ist das Übernahmeregister ACIR der Adreßrechnungsstufe AC angeschlossen, die jeweils Drei-Operanden-Addierer ADD1 und ADD2 aufweist. Außerdem ist ein Adreßübersetzungsspeicher TLB mit drei unabhängig voneinander ansteuerbaren Abfrageeingängen vorgesehen, so daß gleichzeitig von den Drei-Operanden-Addierern ADD1 bzw. ADD2 berechntete und über Auswahlschalter MUX2 von beiden Verarbeitungslinien A und B gelieferte Operandenadressen und die vom Vorauslese-Befehlszähler PFPCR der ersten Stufe PF gelieferten virtuellen Befehlsadressen in absolute Adressen übersetzt werden können. Bei diesem Adreßübersetzungsspeicher handelt es sich zweckmäßig um einen voll assoziativ arbeitenden Speicher mit drei individuellen Vergleichersätzen je Eintrag entsprechend den drei Abfrageeingängen. Die Ausgänge der einzelnen DreiOperanden-Addierer ADD... und die Ausgänge des Adreßumsetzungsspeichers TLB sind entsprechend den beiden Verarbeitungslinien A und B mit getrennten Sätzen von Übernahmeregistern RMRES1, RMRES2 und RMADR1/2 der nachfolgenden gemeinsamen dritten Stufe RM zur Operandenbereitstellung verbunden, die mit einem Operandencache OC für die Bereitstellung der Speicheroperanden gekoppelt ist.

Die dritte Stufe RM speist schließlich eine nachfolgende Befehlsausführungseinheit EX.... Im vorliegenden Fall sind zwei getrennte Befehlsausführungseinheiten EX1 und EX2 im unteren Teil von Figur 1 angedeutet. Die ausführlicher dargestellte Befehlsausführungseinheit EX1 ist beispielsweise mit der Aufbereitungseinheit zu einer Einheit zusammengefaßt und führt im wesentlichen alle RR-und RX-Befehle aus. Sie besteht in der üblichen Weise aus zwei Operandenregistern AOP und BOP zur Ansteuerung einer arithmetisch-logischen Verknüpfungseinheit ALU.

Die Befehlsausführungseinheit EX1 weist neben den beiden Operandenregistern AOP und BOP ein weiteres Register RES auf, das mit den Ergebnisregistern RMRES1 und RMRES2 der dritten Stufe RM zur Übernahme des von einem der Drei-Operanden-Addierern ADD1 bzw. ADD2 der zweiten Stufe AC berechneten Ergebnisses eines damit bereits ausgeführten Parallelbefehls koppelbar ist, der die Operandenbereitstellungsstufe RM und die Befehlsausführungseinheit EX1 nicht mehr zur Ausführung benötigt Die Ergebnisse solcher Befehle werden daher parallel zum anderen Befehl eines Befehlspaares zunächst bis in die Befehlsausführungseinheit EX1 mitgeführt und erst dann an das zuständige Register eines weiterhin gezeigten Mehrzweckregistersatzes GR weitergeleitet, um die logische Reihenfolge der Befehle einhalten zu können. Außerdem ist dieses Register RES mit dem Ausgang des Operandencache OC koppelbar, um Speicheroperanden zu übernehmen, die an ein Register des Mehrzweckregistersatzes GR weiterzuleiten sind.

Die Register des Mehrzweckregistersatzes GR sind außerdem in bekannter Weise von den Übernahmeregistern ACIR und von den Befehlsausführungseinheiten EX... aus gezielt ansteuerbar, um die für die Operandenadreßrechnung benötigten Adreßteile oder die für die Befehlsausführung benötigten Operanden zu erhalten und um Ergebnisse einer Befehlsausführung gezielt dort abspeichern zu können.

Weiterhin ist mit dem Ausgang der arithmetisch logischen Verknüpfungseinheit ALU ein Schreibpuffer WB verbunden, um die Ergebnisse ausgeführter Speicherbefehle in bekannter Weise zwischenzuspeichern, bis sie ohne Beeinträchtigung der Verarbeitungsleistung weitergeleitet werden können.

Die Ausführung von SS-Befehlen erfolgt durch die weitere Befehlsausführungseinheit EX2. Analog können weitere Befehlsausführungseinheiten für die Ausführung gesonderter Befehle, z.B. von Gleitpunktbefehlen usw., vorgesehen sein. Diese weiteren Befehlsausführungseinheiten werden jeweils befehlsabhängig angesteuert, wobei - wie im unteren Teil von Figur 1 angedeutet, die beiden berechneten Operandenadressen MMAD1 und MMAD2 und aus dem Operandencache OC gelesene Operanden MMOP übergeben werden. Für die aus dem Operandencache OC gelesenen Speicheroperanden MMOP dient das Operandenregister BOP der Befehlsausführungseinheit EX1 jeweils als Leseregister für das Operandencache OC.

Im einzelnen nicht gezeigt ist dagegen der sich auf den Operationscode der einzelnen von der ersten Stufe PF jeweils für die Aufbereitung bereitgestellten Befehle beziehende Steuerungsteil zur Steuerung der in den einzelnen Verarbeitungsstufen PF, AC,RM bis zur Befehlsausführung EX... auszuführenden befehlsabhängigen Funktionen, da dieser in bekannter Weise ausgebildet sein kann, allerdings mit dem Unterschied, daß im Falle einer parallelen Bereitstellung zweier Befehle die Operationscodes beider Befehle gleichzeitig befehlsbezogen zu berücksichtigen sind.

Gezeigt sind weiterhin einige Auswahlschalter MUX1 bis MUX6.

Der Auswahlschalter MUX1 reagiert auf Sprungbefehle, so daß bei einem Sprungbefehl an erster Stelle über den Eingang 0 die vom Drei-Operanden-Addierer ADD1 berechnete Sprungadresse und bei einem Sprungsbefehl an zweiter Stelle über den Eingang 1 die vom Drei-Operanden-Addierer ADD2 berechnete Sprungadresse zum Vorauslese-Befehlszähler PFPCR der jeweils anderen Verarbeitungslinie A bzw. B weitergeleitet wird.

Der Auswahlschalter MUX2 schaltet nur bei Befehlen der Gruppe C und D die zugehörigen Ausgänge der Addierer ADD1 bzw. ADD2 mit der jeweiligen Operandenadresse zum Adreßumsetzungsspeicher TLB durch, und zwar bei einem ersten Befehl über den Eingang 0 und bei einem zweiten Befehl über den Eingang 1. Entsprechend werden nur bei diesen Befehlen Speicheradressen MMAD ins Register RMAD der Stufe RM übernommen.

Über den Auswahlschalter MUX4 ist dem Operandenregister BOP wahlweise ein über den vorgeschalteten Auswahlschalter MUX3 bereitgestellter Registeroperand oder aber ein Speicheroperand MMOP aus dem Operandencache OC zuführbar, während über den Auswahlschalter MUX6 entweder von den Drei-Operanden-Addierern ADD1 bzw. ADD2 an die Ergebnisregister RMRES1 bzw. RMRES2 gelieferte Ergebnisse zu Befehlen der Gruppe A über den vorgeschalteten Auswahlschalter MUX5 oder aber ein bei Befehlen der Gruppe C aus dem Operandencache OC gelesener Speicheroperand an das Register RES weitergeleitet wird.

Auf die Auswahlschalter MUX5 und MUX6 kann verzichtet werden, wenn entsprechend einer eingeschränkten Parallelarbeit als zweite Befehle nur Befehle der Gruppe A aufbereitet werden und daher nur die Register RMRES2 ein an das Register RES weiterzuleitendes Endergebnis liefern. Auf die Befehle der Gruppe C zurückgehende Speicheroperanden MMOP aus dem Operandencache werden dann durch den Auswahlschalter MUX4 über das Operandenregister BOP geleitet.

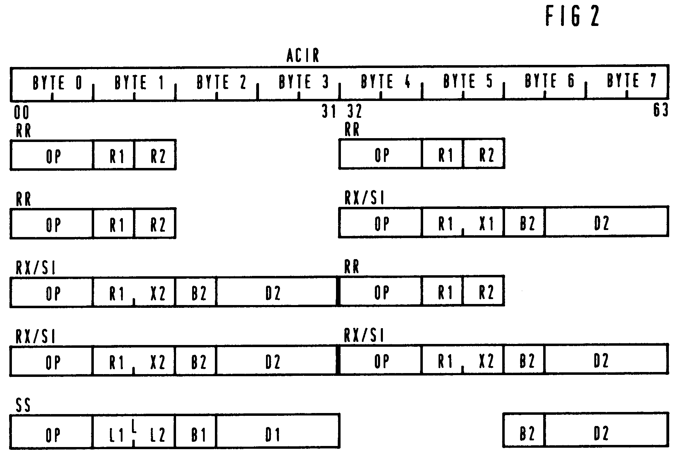

Bevor weitere Einzelheiten und die Arbeitsweise der Anordnung von Figur 1 näher erläutert werden, seien anhand von Figur 2 bis 4 zunächst die Voraussetzungen näher erläutert.

Figur 2 zeigt das Übernahmeregister ACIR von Figur 1 und darunter die Zuordnung der Befehle zu den einzelnen Registerfeldern abhängig vom jeweiligen Befehlstyp. Die Breite des Registers umfaßt insgesamt 8 Byte zu je 8 Bit, so daß zwei vollständige RX-Befehle parallel übernommen werden können. Damit ist auch jede andere Kombination aus RR-und/oder RX-Befehlen mit gleichartiger linksbündiger Ausrichtung jeweils zweier Befehle ausgehend vom Registerfeld BYTE1 oder BYTE4 im Register ACIR bereitstellbar. Nur SS-Befehle werden einzeln übernommen, wobei die Registerfelder BYTE4 und BYTE5 frei bleiben. Die einzelnen Registerfelder BYTE0 bis BYTE7 werden so einheitlich jeweils gleichartigen Befehlsbestandteilen zugeordnet.

Um diese vorgegebene Zuordnung sicherzustellen, ist in Figur 1 die die Einstellung der Auswahleinrichtung ALIGN steuernde Auswahlsteuerung AST so ausgebildet, daß abhängig von dem den Befehlstyp RR, RX oder SS anzeigenden Bestandteil des Operationscodes im jeweils ersten Befehl in üblicher Weise nicht nur auf den nächstfolgenden Befehl umgesteuert wird, sondern daß zusätzlich entschieden wird, ob gleichzeitig auch im Falle eines Nicht-SS-Befehls der Folgebefehl auszuwählen ist und welche Zuordnung zu den Registerfeldern im Übernahmeregister ACIR jeweils einzustellen ist.

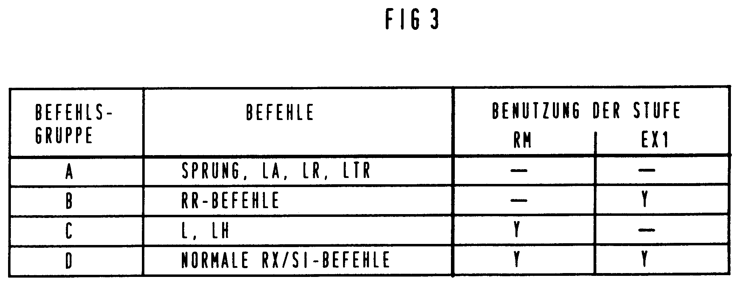

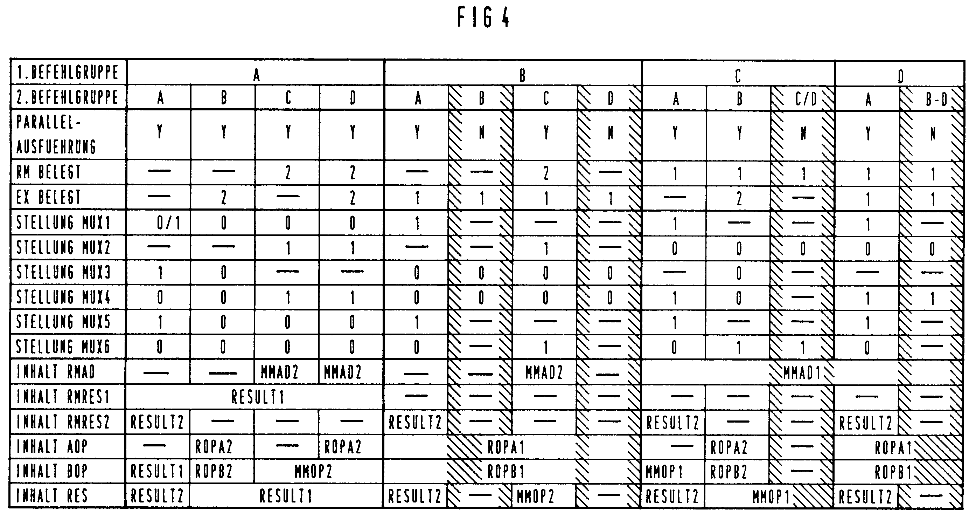

Wie bereits eingangs erwähnt, ist die gleichzeitige Aufbereitung von zwei parallel im Übernahmeregister ACIR bereitstellten Befehlen nur unter bestimmten Voraussetzungen möglich, nämlich dann, wenn die jeweils parallel aufzubereitenden Befehle nicht gleichzeitig die nachfolgende dritte Stufe RM für die Operandenbereitstellung oder die daran anschließende Befehlsausführungseinheit EX1 benötigen. Figur 3 zeigt eine diesbezügliche Zusammenstellung der vier verschiedenen Befehlsgruppen A bis D mit den Angaben über die der jeweiligen Befehlsgruppe zuzuordnenden Befehle und über die damit verbundene Benutzung der Stufen RM und EX1. Die sich daraus ergebenden Möglichkeiten zur Parallelverarbeitung sind in der Tabelle von Figur 4 zusammengestellt.

Die beiden ersten Zeilen geben jeweils den Typ A bis D des jeweils ersten Befehls in Kombination mit den verschiedenen Typen A bis D für den jeweils zweiten Befehl wieder, während Zeile 3 angibt, ob entsprechend Y eine Parallelausführung möglich ist oder entsprechend N nicht.

In Verbindung mit der Gruppeneinteilung gemäß Figur 3 ist ersichtlich, daß Befehle der Gruppe A, gleichgültig ob als erster oder als zweiter Befehl, gleichzeitig mit jedem anderen Befehl zusammen ausgeführt werden können. Außerdem können jeweils ein Befehl der Gruppe B und der Gruppe C parallel ausgeführt werden. Alle anderen Befehlskombinationen sind dagegen nicht möglich, und die entsprechenden Spalten daher gestrichelt unterlegt.

Die Zeilen 4 und 5 geben zusätzlich an, welcher der Befehle 1 oder 2 die Stufen RM bzw. EX belegt und diese damit für den jeweils anderen Befehl sperrt.

In Auswirkung dieser im Hinblick auf eine mögliche Parallelverarbeitung getroffenen Gruppeneinteilung der Befehle sind die die Operandencodes OP enthaltenden Registerfelder BYTE0 und BYTE4 des Registers ACIR jeweils mit einer die Gruppenzugehörigkeit der Befehle überwachenden Steuereinrichtung ITAB gekoppelt, die entscheidet, ob eine Parallelverarbeitung zweier Befehle möglich ist oder nicht, und die dann davon abhängig die Auswahlsteuereinheit AST für die bereitstellende Auswahleinrichtung ALIGN veranlaßt, für den nächsten Verarbeitungszyklus auf den nächsten oder übernächsten Befehl als den nachfolgend bereitzustellenden ersten Befehl umzuschalten.

Die weiteren Zeilen von Figur 4 geben die bei den jeweils gruppenabhängigen Befehlskombinationen gemäß den Zeilen 1 und 2 notwendigen Einstellungen der einzelnen Auswahlschalter MUX1 bis MUX6 und davon abhängig die Registerinhalte der Übernahmeregister der dritten Stufe RM und der Befehlsausführungseinheit EX1 wieder.

Danach kann ein zur Befehlsgruppe A gehörender Sprungbefehl nur gemäß der ersten Spalte als erster oder zweiter Befehl auftreten, in allen übrigen Fällen nur als zweiter Befehl, so daß der Auswahlschalter MUX1 nur gemäß der ersten Spalte auf den Eingang 0 umgesteuert wird. Die Einstellung des Auswahlschalters MUX2 ist von den Befehlen der Gruppen C und D abhängig, wobei bei ersten Befehlen der Eingang 0 und bei zweiten Befehlen der Eingang 1 freigegeben und das Register RMAD mit der übersetzten absoluten Adresse MMAD1 bzw. MMAD2 geladen wird.

Bei eingeschränkter paralleler Befehlsaufbereitung sind jeweils nur die Spalten mit einem Befehl der Gruppe A als zweiten Befehl gemäß Zeile 2 gültig, so daß immer das Ergebnis RESULT2 vom Addierer ADD2 in das Register RMRES2 und dann ins Register RES übernommen wird, was der Einstellung des Auswahlschalters MUX5 auf den Eingang 1 und der des Auswahlschalters MUX6 auf den Eingang 0 entspricht. Wird gleichzeitig gemäß der ersten Spalte auch an erster Stelle ein Befehl der Befehlsgruppe A bereitgestellt, dann wird das vom zuständigen Addierer ADD1 über das Register RMRES1 bereitgestellte Befehlsergebnis RESULT1 über den Eingang 1 des Auswahlschalters MUX3 an das Operandenregister BOP und von dort ungeändert an das zuständige Register des Mehrzweckregistersatzes GR weitergeleitet. Lediglich wenn die beiden gleichzeitig aufzubereitenden Befehle der Gruppe A Sprungbefehle sind, wird der parallele zweite Sprungbefehl zunächst bei der Aufbereitung nicht berücksichtigt.

Im übrigen wird bei einem Befehl der Befehlsgruppe A an erster Stelle entsprechend den Spalten 2 bis 4 das vom Addierer ADD1 gelieferte und im Register RMRES1 bereitgestellte Befehlsergebnis RESULT1 immer ins Register RES übertragen, während dem Operandenregister AOP befehlsabhängig der Registeroperand ROPA2 und dem Operandenregister BOP der Registeroperand ROPB2 oder der gelesene Speicheroperand MMOP2 des jeweils zweiten Befehls zugeführt wird. Analoges gilt für die anderen gemäß Zeile 3 möglichen Befehlskombinationen.

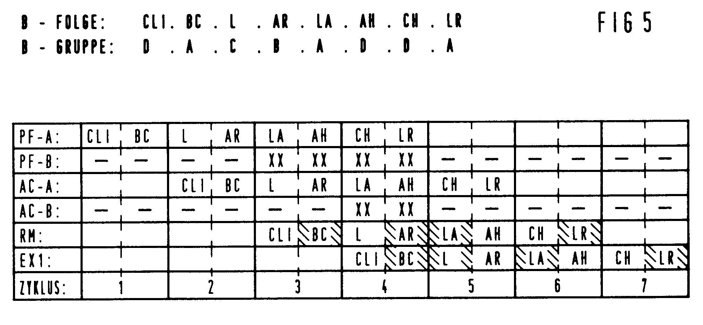

Nachfolgend seien die Auswirkungen der erfindungsgemäßen Aufbereitungseinheit anhand der Ablaufdiagramme von Figur 5 bis 8 für verschiedene Befehlsfolgen erläutert, wobei die Aufbereitung bei allen Beispielen mit der Verarbeitungslinie A beginnt.

Bei der Befehlsfolge mit den Befehlen CLI.BC.L.AR.LA.AH.CH.LR gemäß Figur 5 ist die Voraussetzung einer Parallelaufbereitung in vollem Umfang gegeben. Unterstellt ist dabei, daß die Bedingung des an zweiter Stelle folgenden, bedingten Sprungbefehls BC nicht erfüllt ist.

In jedem der Verarbeitungszyklen ZYK1 bis ZYK4 werden von der ersten Stufe PF-A zwei Befehle bereitgestellt, und die jeweiligen Befehlspaare CLI/BC, L/AR, LA/AH... durchlaufen dann nacheinander die Stufen PF-A, AC-A, RM und EX1. In der zweiten Stufe AC-A wird dabei der Sprungbefehl BC im ersten Befehlspaar CLI/BC erkannt und mit der berechneten Sprungadresse die Verarbeitungslinie B mit der möglichen Sprungbefehlsfolge XX.XX.XX.XX gestartet, die aber nach Ausführung des Vorgängerbefehls CLI wegen Nichterfüllung der Sprungbedingung ab Zyklus ZYK5 nicht fortgeführt wird. Parallel dazu werden die Befehlspaare der linearen Befehlsfolge in der Verarbeitungslinie A ohne Verzögerung von Stufe zu Stufe weitergeleitet, wobei die schraffierten Felder in den Stufen RM und EX1 anzeigen, daß die zugehörigen Befehle, z.B. BC, AR, LA, LR diese Stufen nicht zur Aufbereitung oder Ausführung benötigen. Diese Stufen stehen daher im jeweiligen Zyklus dem jeweiligen Parallelbefehl, z.B. CLI, AR, AH oder CH an erster bzw. zweiter Stelle allein zur Verfügung. Insgesamt können so in vier Zyklen, nämlich den Zyklen ZYK4 bis ZYK7, acht aufeinanderfolgende Befehle ausgeführt werden.

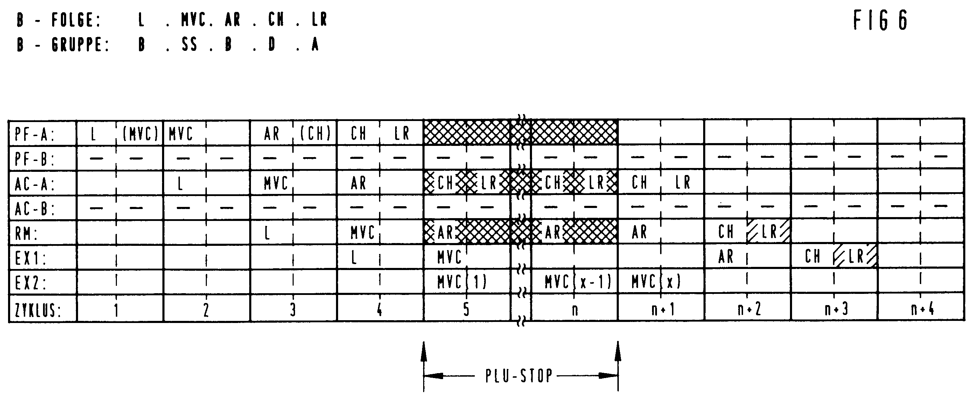

Beim Ablaufdiagramm von Figur 6 enthält die zugrundegelegte Befehlsfolge L.MVC.AR.CH.LR einen SS-Befehl, nämlich MVC, an zweiter Stelle. Im Zyklus ZYK1 wird daher zwar neben dem Befehl L aus der Gruppe B noch ein Teil des SS-Befehls MVC von der ersten Stufe PF-A bereitgestellt, aber in der nachfolgenden zweiten Stufe AC-A nicht berücksichtigt. Die eigentliche Bereitstellung des SS-Befehls MVC durch die erste Stufe PF-A erfolgt daher erst im Zyklus ZYK2 als Einzelbefehl. Auch beim nachfolgenden Befehlspaar AR/CH ist keine Parallelverarbeitung möglich. Der zwar von der ersten Stufe PF-A im Zyklus ZYK3 bereitgestellte Befehl CH wird daher im nachfolgenden Zyklus ZYK4 nochmals zusammen mit dem Befehl LR der Gruppe A als zweitem Befehl bereitgestellt. Die von der ersten Stufe PF-A jeweils bereitgestellten, aber von der zweiten Stufe AC-A im nächsten Zyklus jeweils nicht berücksichtigten Befehlsteile oder Befehle sind jeweils in Klammern gesetzt.

Im Zyklus ZYK4 erreicht der SS-Befehl MVC die Stufe RM, so daß die Speicheradressen MMAD1 und MMAD2, wie in Figur 1 angedeutet, an die zuständige Befehlsausführungseinheit EX2 übergeben werden können, während der bereits aus dem Operandencache OC gelesene Speicheroperand MMOP im nachfolgenden Zyklus ZYK5 zur Übergabe an die Befehlsausführungseinheit EX2 bereitsteht. Gleichzeitig wird ab dem Zyklus ZYK5 die Aufbereitung der Folgebefehle AR, CH und LR gestoppt, was durch die mit einer Kreuzschraffierung unterlegten Befehlsfelder angedeutet ist, bis mit Zyklus ZYKn der vorletzte Ausführungszyklus MVC(x-1) des SS-Befehls beendet ist. Analoges gilt auch für Befehle, beispielsweise für Gleitpunktbefehle, die von einer gesonderten Befehlsausführungseinheit ausgeführt werden.

Selbstverständlich braucht die Aufbereitung von Befehlen nicht sofort gestoppt zu werden, solange nicht alle Stufen der Aufbereitungseinheit mit Befehlen belegt sind. So kann zum Beispiel bei einem dem SS-Befehl folgenden Sprungbefehl die nichtaktive Verarbeitungslinie bereits mit der Sprungbefehlsfolge gestartet und diese bis zum Erreichen der Stufe RM aufbereitet werden.

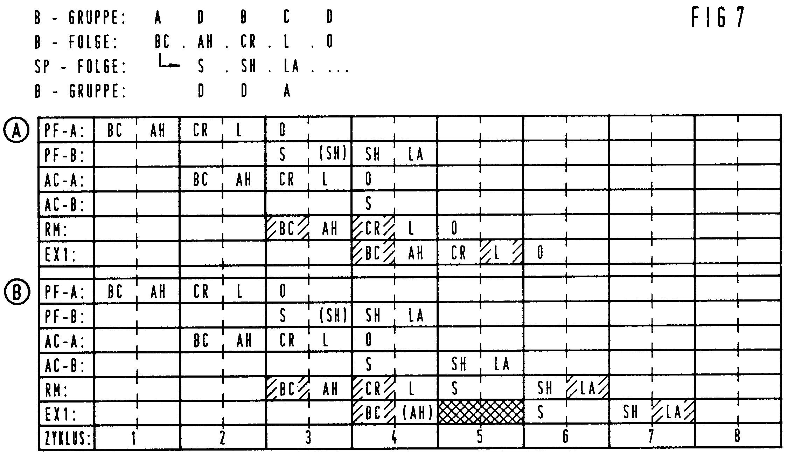

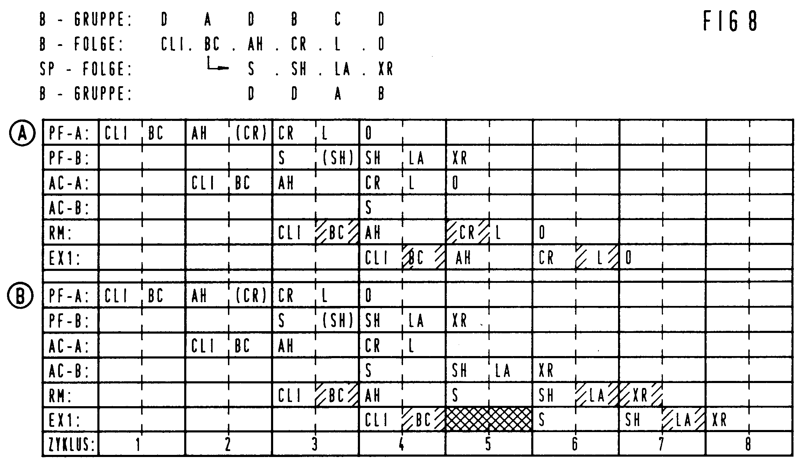

Die Ablaufdiagramme von Figur 7 und Figur 8 zeigen den Einfluß von bedingten Sprungbefehlen BC als erster oder zweiter Befehl im jeweils bereitgestellten Befehlspaar, wobei sich der obere Teil A jeweils auf eine nichterfüllte und der untere Teil B jeweils auf eine erfüllte Sprungbedingung mit Überleitung in die Verzweigungsbefehlsfolge SP-FOLGE bezieht.

In Figur 7 erscheint der Sprungbefehl BC als erster der zu verarbeitenden Befehlsfolge BC.AH.CR.L.O. Dieser Fall kann beispielsweise nur auftreten, wenn der Vorgängerbefehl ein SS-Befehl ist, oder wenn auf einen Sprungbefehl wiederum ein Sprungbefehl folgt.

Wieder werden die Befehle paarweise von der ersten Stufe PF-A bereitgestellt. Die zweite Stufe AC-A erkennt den Sprungbefehl BC an erster Stelle und startet nach Berechnung der Adresse für die Sprungbefehlsfolge im nächsten Zyklus ZYK3 die andere VerarbeitungslinieB für die mögliche Sprungbefehlsfolge S.SH.LA.. Da die ersten beiden Befehle dieser Sprungbefehlsfolge derselben Befehlsgruppe D angehören, wird wiederum nur der erste bereitgestelle Befehl S in der zweiten Stufe AC-B weiter aufbereitet und der zweite Befehl SH im nächsten Zyklus ZYK4 erneut bereitgestellt. Wird im Zyklus ZYK3 bei der Ausführung des Vorgängerbefehls zum Sprungbefehl BC festgestellt, daß die Sprungbedingung nicht erfüllt ist, dann werden gemäß dem oberen Teil A die nachfolgenden Befehlspaare BC/AH, CR/L nacheinander ohne Verzögerung an die Befehlsausführungseinheit EX1 zur Ausführung weitergeleitet, wobei die von den Befehlen der einzelnen Befehlspaare nicht benötigten Stufen wiederum durch die schraffierten Befehlsfelder gekennzeichnet sind. Die gestartete Verarbeitungslinie B für die Sprungbefehlsfolge wird außerdem wieder zurückgesetzt.

Ist dagegen die Sprungbedingung erfüllt, dann wird gemäß dem unteren Teil B ab Zyklus ZYK4 die Aufbereitung der Sprungbefehlsfolge in der Stufe AC-B fortgesetzt, so daß sie ab Zyklus ZYK6 zur Ausführung gelangen kann. Dagegen wird bei dem im Zyklus ZYK4 noch zur Ausführung gelangenden Befehlspaar BC/AH der lineraren Befehlsfolge die Ergebnisbildung für den zweiten Befehl AH unterdrückt, so daß für die Befehlsausführungseinheit EX1 der Zyklus ZYK4 zum Pseudoarbeitszyklus und der Zyklus ZYK5 zum Verlustzyklus wird, was durch die Klammern am Befehl AH und durch die Kreuzschraffierung angedeutet ist.

Abweichend zu Figur 7 geht bei der Befehlsfolge BC.AH.CR.L.O gemäß Figur 8 dem Sprungbefehl BC kein SS-Befehl, sondern ein Befehl einer anderen Befehlsgruppe voraus, z.B. der Befehl CLI der Gruppe D, so daß der nachfolgende Sprungbefehl BC als zweiter Befehl von der ersten Stufe PF-A bereitgestellt und parallel aufbereitet wird.

Ist gemäß dem oberen Teil A die Sprungbedingung wiederum nicht erfüllt, ergeben sich ähnliche Verhältnisse wie bei Figur 7, d.h. in jedem Zyklus ab Zyklus ZYK4 wird ein die Befehlsausführungsstufe EX1 tatsächlich benötigender Befehl ausgeführt, während der Sprungbefehl BC nur parallel mitgeführt wird.

Bei erfüllter Sprungbedingung gemäß dem unteren Teil B kommt der erste Befehl S der Sprungbefehlsfolge zwar auch erst im Zyklus ZYK6 zur Ausführung, so daß der Vorgängerzyklus ZYK5 zum Verlustzyklus wird, was wiederum durch die Kreuzschraffierung angedeutet ist. Jedoch besteht die hohe Wahrscheinlichkeit, daß der mit dem Sprungbefehl BC gekoppelte Befehl, z.B. CLI als Befehl der Gruppe B oder D die Befehlsausführungsstufe EX1 zur Ausführung benötigt, so daß der Pseudoausführungszyklus ZYK4 für den Sprungbefehl BC voll für den Vorgängerbefehl CLI genutzt werden kann.

Wie aus den Ablaufdiagrammen gemäß Figur 7 bis Figur 8 ersichtlich ist, führt die Verdopplung der ersten Aufbereitungsstufen bis zur gemeinsamen Stufe für die Operandenbereitstellung in Verbindung mit der möglichen Bereitstellung jeweils zweier Befehle allein schon bei bedingten Sprungbefehlen zu wesentlichen Leistungssteigerungen, da ab Erkennen eines solchen Sprungbefehles die Aufbereitung in zwei Verarbeitungslinien erfolgt und damit bei negativer Sprungentscheidung der lineare Folgebefehl ohne Zyklusverlust zur Ausführung gelangen kann, gleichgültig ob der Sprungbefehl als erster oder zweiter Befehl eines Befehlspaares bereitgestellt wird. Auch bei positiver Sprungentscheidung erfolgt dadurch die Ausführung des ersten Befehls der Sprungbefehlsfolge immer um einen Zyklus früher, so daß statt der bisher entstehenden zwei Verlustzyklen immer nur ein echter Verlustzyklus entsteht.

Hinzu kommt der Vorteil, daß Sprungbefehle an zweiter Stelle eines Befehlspaares und weiterhin die Befehle, die zur Ausführung gleichfalls weder die Operandenbereitstellungsstufe RM noch die Befehlsausführungsstufe EX1 zur Ausführung benötigen, wie beispielsweise die wichtigen Befehle LA, LR und gegebenenfalls LTR, parallel zu anderen Befehlen ausgeführt werden können ohne einen eigenen Ausführungszyklus zu beanspruchen. Bei all diesen Befehlen wird nämlich das Ergebnis bereits in der Adreßrechnungsstufe AC gebildet und dann bis zur Befehlsausführungseinheit EX weitergeleitet, von wo es dann in ein Mehrzweckregister geschrieben wird, was gleichzeitig mit der Ausführung des jeweiligen Parallelbefehls erfolgen kann.

## Patentansprüche

1. Befehlsaufbereitungseinheit für Verarbeitungsprozessoren in Datenverarbeitungsanlagen mit mehreren nach dem Fließbandprinzip zusammenarbeitenden aufeinanderfolgenden Befehlsbearbeitungsstufen, z.B. einer ersten Stufe (PF) für die Bereitstellung der aufeinanderfolgend zu bearbeitenden Befehle, einer zweiten Stufe (AC) für die Berechnung der Operandenadressen und einer dritten Stufe (RM) für die Operandenbereitstellung, in Verbindung mit wenigstens einer nachfolgenden Befehlsausführungseinheit (EX...),
**dadurch gekennzeichnet,**
- daß die der Stufe (RM) für die Operandenbereitstellung vorausgehenden Stufen (PF und AC) jeweils doppelt vorgesehen sind und parallele Verarbeitungslinien (A bzw. B) bilden, die mit einem gemeinsamen Befehlscache (IC) zusammenarbeiten und wahlweise die nachfolgende gemeinsame Stufe (RM) für die Operandenbereitstellung mit aufbereiteten Befehlen speisen,
- daß mit Ausnahme von SS-Befehlen von der jeweils ersten Stufe (PF) jeweils zwei aufeinanderfolgende Befehle parallel zur Bearbeitung bereitgestellt und jeweils parallel von der zweiten Stufe (AC) bearbeitet werden, wenn beide Befehle nicht gleichzeitig die nachfolgende gemeinsame dritte Stufe (RM) oder die daran anschließende Befehlsverarbeitungseinheit (EX...) benötigen,
- daß bei Bereitstellung eines Sprungbefehles (BC) durch die erste Stufe (PF) einer Verarbeitungslinie (A oder B) nach Berechnung der Sprungadresse in der zweiten Stufe (AC) die jeweils andere Verarbeitungslinie (B bzw. A) mit den Befehlen der Sprungrichtung aus dem Befehlscache (IC) gespeist wird und diese Befehle parallel zu den Befehlen der linearen Programmfolge in der anderen Verarbeitungslinie aufbereitet werden, bis infolge der Ausführung des Vorgängerbefehls in der zuständigen Befehlsausführungseinheit (EX...) entschieden werden kann, ob die Sprungbedingung erfüllt ist oder nicht, und
- daß abhängig vom Ergebnis des ausgeführten Vorgängerbefehles die Befehlsbearbeitung mit den aufbereiteten Befehlen der linearen Befehlsfolge in der einen Verarbeitungslinie oder aber mit den aufbereiteten Befehlen der Verzweigungsbefehlsfolge in der anderen Verarbeitungslinie fortgesetzt wird.

2. Befehlsaufbereitungseinheit nach Anspruch 1,
**dadurch gekennzeichnet,**
daß von in der ersten Stufe (PF) jeweils acht aufeinanderfolgenden Befehlsbytes befehlsabhängig die zu zwei aufeinanderfolgenden Nicht-SS-Befehlen oder zu einem SS-Befehl gehörenden Befehlsbytes stellengerecht für die Übernahme in vorgegebene Felder des Übernahmeregisters (ACIR) der zweiten Stufe (AC) bereitgestellt werden, und daß in der zweiten Stufe (AC) jeweils zwei Drei-Operanden-Addierer (ADD1 und ADD2) vorgesehen sind, die abhängig von den Angaben in den beiden Befehlen oder des SS-Befehls und/oder in den durch diese bezeichneten gemeinsamen Mehrzweckregistern (GR) die benötigten Adressen oder Ergebnisse berechnen und zur Übergabe an die nachfolgende dritte Stufe (RM) bzw. an die erste Stufe (PF) im Falle einer Sprungadresse bereitstellen.

3. Aufbereitungseinheit nach Anspruch 2,
**dadurch gekennzeichnet,**
- daß die Auswahleinrichtung (ALIGN) für die feldgerechte Bereitstellung der Befehle für die zweite Stufe (AC) entsprechend der vorgegebenen Zuordnung zu den Feldern im Übernahmeregister (ACIR) bei Auswahl eines SS-Befehles an erster Stelle unmittelbar entsprechend der vorgegebenen Zuordnung für SS-Befehle und bei Auswahl eines Nicht-SS-Befehles an erster Stelle abhängig von der Befehlslänge dieses Befehles entsprechend der vorgegebenen Zuordnung für die gleichzeitige Übernahme zweier aufeinanderfolgender Befehle eingestellt wird und
- daß mit den den Operationscode (OP) aufnehmenden Feldern des Übernahmeregisters (ACIR) der zweiten Stufe (AC) jeweils eine Steuereinrichtung (ITAB) gekoppelt ist, die abhängig vom jeweils bereitgestellten Befehl ermittelt, ob eine Parallelverarbeitung bei zwei gleichzeitig bereitgestellten Nicht-SS-Befehlen möglich ist, und die davon abhängig die Einstellung der Auswahleinrichtung (ALIGN) der ersten Stufe (PF) auf den nächsten oder übernächsten Befehl als den nachfolgend bereitzustellenden ersten Befehl steuert.

4. Befehlsaufbereitungseinheit nach Anspruch 2 oder 3,
**dadurch gekennzeichnet,**
daß in der zweiten Stufe (AC) für die Adreßrechnung zusätzlich ein assoziativ arbeitender Adreßumsetzungsspeicher (TLB) mit unabhängig voneinander ansteuerbaren Eingängen für die beiden Verarbeitungslinien (A und B) vorgesehen ist, der eine der von den Addierern (ADD...) berechneten virtuellen Adressen in eine absolute Adresse für den Speicherzugriff umwandelt und für die Übergabe an die dritte Stufe (RM) zur Operandenbereitstellung bereitstellt, und daß mit dieser dritten Stufe (RM) ein Operandencache (OC) gekoppelt ist, der anhand der übersetzten Adresse den zugehörigen Operanden für die nachfolgend anzusteuernde Befehlsausführungseinheit (EX..) bereitstellt.

5. Befehlsaufbereitungseinheit nach Anspruch 4,
**dadurch gekennzeichnet,**
daß der Adreßumsetzungsspeicher (TLB) einen dritten unabhängig ansteuerbaren Eingang für vom Vorauslese-Befehlszähler (PFPCR) der beiden Verarbeitungslinien (A, B) zur Verfügung gestellte virtuelle Befehlsadressen zur Übersetzung in für das anzusteuernde Befehlscache (IC) der ersten Stufe (PF) benötigte absolute Adressen aufweist.

6. Befehlsaufbereitungseinheit nach Anspruch 4 oder 5,
**dadurch gekennzeichnet,**
daß neben einer ersten Befehlsausführungseinheit (EX1) für die Ausführung von keine Gleitpunktbefehle darstellenden RR- und RX-Befehlen weitere Befehlsausführungseinheiten (z.B. EX2) für SS-Befehle und andere Gruppen von Befehlen vorgesehen sind und daß in der ersten Befehlsausführungseinheit (EX1) neben den Übernahmeregistern (AOP, BOP) für die beiden möglichen Operanden ein zusätzliches Ergebnisregister (RES) zur Übernahme des von einem der beiden Addierer (ADD1 bzw. ADD2) in der Adreßrechnungsstufe (AC) ermittelten und über die nachfolgende Stufe (RM) zur Operandenbereitstellung weitergeleiteten Ergebnisses eines zu einem anderen parallel aufbereiteten Befehles, der weder die dritte Stufe (RM) zur Operandenbereitstellung noch eine anschließende Befehlsausführungseinheit (EX...) zur Verarbeitung benötigt, für die Weiterleitung an eines der Mehrzweckregister (GR) im zugehörigen Ausführungszyklus vorgesehen ist, so daß die Verarbeitung der jeweils parallel aufbereiteten Befehle durch diese Befehlsausführungseinheit (EX1) mit demselben Ausführungszyklus abgeschlossen wird.

7. Befehlsausführungseinheit nach einem der Ansprüche 1 bis 6,
**dadurch gekennzeichnet,**
daß Auswahlschalter (MUX1, MUX3 und MUX4) den Befehlsaufbereitungsfluß so steuern, daß eine Parallelverarbeitung von zwei Befehlen jeweils nur durchgeführt wird, wenn der jeweils zweite von der ersten Stufe (PF) bereitgestellte Befehl weder die dritte Stufe (RM) für die Operandenbereitstellung noch eine der nachfolgenden Befehlsausführungseinheiten (EX) benötigt.

8. Befehlsausführungseinheit nach einem der Ansprüche 1 bis 6,
**dadurch gekennzeichnet,**
daß Auswahlschalter (MUX1 bis MUX6) den Befehlsaufbereitungsfluß so steuern, daß eine mögliche Parallelverarbeitung von Befehlen immer durchgeführt wird.
